# EUROPÄISCHE PATENTSCHRIFT

(11) **EP 0 421 048 B1**
(45) Veröffentlichungstag und Bekanntmachung des Hinweises auf die Patenterteilung: **19.05.1993**
(21) Anmeldenummer: 90107614.1
(22) Anmeldetag: 21.04.1990
(51) Int. Cl.: E05F 15/00, F16P 3/12, H01H 3/14

(54) **Sicherheitsleiste**
Safety edge
Bordure de sécurité

(30) Priorität: 30.09.1989 DE 3932820
(43) Veröffentlichungstag der Anmeldung: 10.04.1991
(73) Patentinhaber: Haake, André, D-46354 Südlohn (DE); Haake, Oliver, D-46354 Südlohn (DE); Haake, Patrick, D-48691 Vreden (DE)
(72) Erfinder: Haake, Werner, Dipl.-Ing., D-4286 Südlohn (DE)
(74) Vertreter: Habbel, Hans-Georg, Dipl.-Ing.

(56) Entgegenhaltungen:
- EP-A- 0 103 726
- DE-A- 3 821 305
- DE-C- 3 606 499

## Beschreibung

Die Erfindung bezieht sich auf eine Sicherheitsleiste gemäß dem Oberbegriff des Hauptanspruches.

Eine gattungsbildende Sicherheitsleiste wird in der DE-C-36 06 499 beschrieben. Bei dieser bekannten Anordnung werden Kontaktrollen eingesetzt, die über eine Expanderschnur aufeinanderzu gezwungen werden. Zwischen den Kontaktrollen sind Isolierkeilwalzen angeordnet, die mit radial zur Isolierkeilwalzenachse ausgerichteten, in den Innenraum der Isolierkeilwalzen vorspringenden Keilflächen zwischen den einzelnen Kontaktrollen angeordnet sind. Durch diese Anordnung wird ein zuverlässiges Ansprechen der Schließkantensicherung erreicht, da bereits bei Belastung ein Minimum an Keilwirkung zwischen der Kontaktrolle und der Isolierkeilwalze eine Unterbrechung des Ruhestromkreises bewirkt, der selbst dann zu einer Schaltfunktion führt.

Es wurde als nachteilig empfunden, daß die bekannte Anordnung relativ hoch bauen muß und daß sie nicht in einer plattenförmigen Gestaltung angeordnet werden kann, um beispielsweise großflächige Kontakte zu überwachen.

Der Erfindung liegt die Aufgabe zugrunde, eine Sicherheitsleiste zu schaffen, die nur eine geringe Bauhöhe aufweist, d.h. sehr flach baut und einen großen Flächenbereich sichernd abdeckt.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgeschlagen, daß Kontaktplatten eingesetzt werden, zwischen denen Keilplatten angeordnet sind. Die beiden Bauteile werden über eine oder mehrere Expanderschnüre aufeinanderzu gezwungen und beide Bauteile weisen an ihren aufeinanderzu gerichteten Endflächen Keilflächen auf, so daß die beiden Bauteile unter dem Zug der Expanderschnur bestrebt sind, nach oben bzw. nach unten auszuweichen. Die Ausweichbewegung wird aber durch die in den beiden Bauteilen angeordnete Expanderschnur begrenzt. Hierbei gibt es mehrere Möglichkeiten, um diese Ausweichbewegung herbeizuführen. Entscheidend ist aber, daß nunmehr bei Belastung der nach oben ausgewichenen Platte bereits ganz geringfügige Bewegungen nach unten ausreichen, die Platten auseinanderzuziehen und die Kontaktstellen zu unterbrechen und damit die Schaltfunktion herbeizuführen.

Durch den Zusammenbau einer Vielzahl solcher Keilplatten und Kontaktplatten wird eine Schaltmatte geschaffen, die problemlos von Fahrzeugen überfahren werden kann, die aber schon bei geringer Belastung entsprechende Schaltkontakte auslöst.

Um die Bewegung der Kontaktplatten bzw. Keilplatten nach oben oder unten zu begrenzen, sind die zusammenwirkenden Ränder dieser Bauteile schwalbenschwanzförmig ausgebildet, so daß z. B. die Kontaktplatten in den Keilplatten gefangen sind.

Ein Ausführungsbeispiel der Erfindung wird nachfolgend anhand der Zeichnung erläutert. Die Zeichnung zeigt dabei in
- Fig. 1: schaubildlich einen Ausschnitt aus einer Schaltmatte, in
- Fig. 2: in größerem Maßstab den aneinander angrenzenden Bereich einer Keilplatte und einer Kontaktplatte und in
- Fig. 3: eine gegenüber Fig. 1 und 2 abgeänderte Ausführungsform der Erfindung.

In der Zeichnung ist eine Sicherheitsleiste 1 gezeichnet, die eine Schaltmatte 2 bildet. Die eigentliche Sicherheitsleiste besteht aus Kontaktplatten 6 und Keilplatten 7, die über schräge Endflächen 3 und 4 aneinander anliegen. In den Kontaktplatten 6 und den Keilplatten 7 sind Bohrungen 9 bzw. 10 vorgesehen, die eine Expanderschnur 12 aufnehmen, wobei bei dem dargestellten Ausführungsbeispiel zwei Expanderschnüre 12 vorgesehen sind.

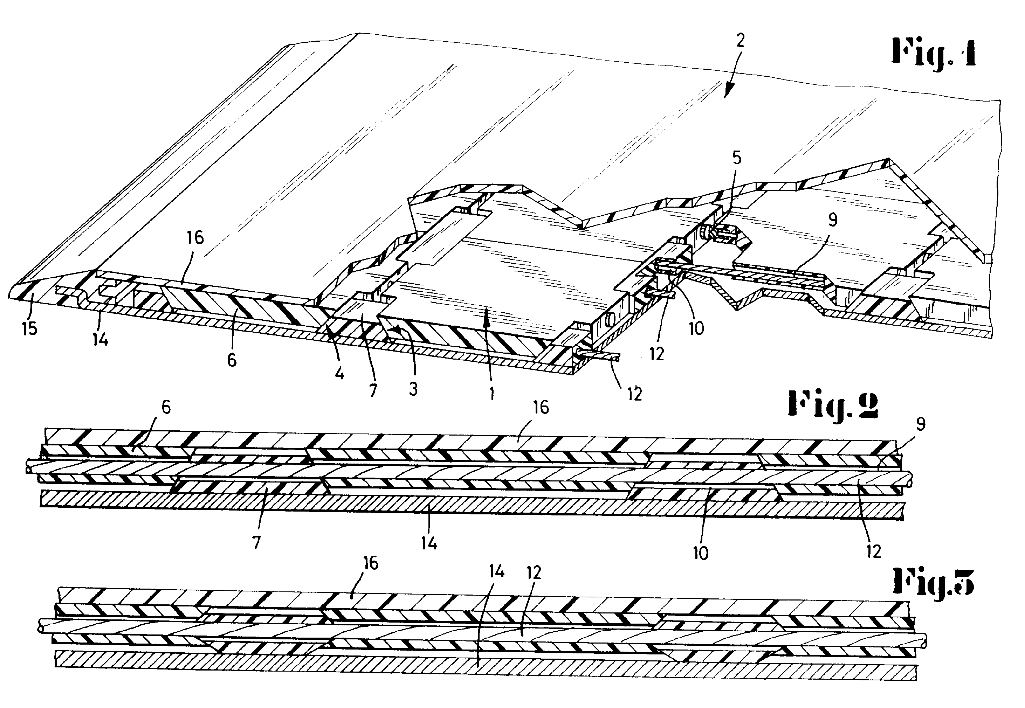

In der Darstellung in Fig. 2 ist dargestellt, daß die Bohrungen 9 und 10 einen größeren Durchmesser als die Expanderschnüre 12 aufweisen und daß im schaltbereiten Zustand die Expanderschnur 12 an der Keilplatte 7 im oberen Bereich der Bohrung 10 anliegt, während sie in der Bohrung 9 der Kontaktplatte 6 im unteren Bereich anliegt. Durch entsprechende Druckbeaufschlagung entweder auf die Keilplatte 6 oder auf die Kontaktplatte 7 bewegen sich nunmehr die beiden Endflächen 3 und 4 so gegeneinander, daß ein Auseinanderdrücken der beiden Bauteile 6 und 7 erfolgt, d.h. die Kontaktplatte 6 wird von der Keilplatte 7 entfernt.

Die Keilplatten 7 sind kleiner ausgebildet als die Kontaktplatten 6 und somit ist es möglich, daß die Kontaktplatten 6 in ihrem mittleren Bereich einen Kontaktbereich aufweisen, der eine Kontaktstelle 5 besitzt. Im normalen in Fig. 1 dargestellten Zustand liegen die Kontaktstellen 5 der Kontaktplatten 6 aneinander an und dadurch ist eine Stromschaltung (Ruhestromschaltung) gegeben.

Werden nunmehr die Kontaktplatten 6 durch die Wirkung der Keilplatten 7 auseinandergedrückt, wird die Kontaktstelle 5 unterbrochen und eine Unterbrechung des Ruhestromkreises herbeigeführt, der dann zu einer Schaltfunktion führt.

In dem in Fig. 1 dargestellten Ausführungsbeispiel befindet sich die eigentliche Sicherheitsleiste innerhalb eines Gehäuses, das aus einer Bodenplatte 14, einer Auffahrkante 15 und einer Deckplatte 16 besteht, wobei die Auffahrkante 15 und die Deckplatte 16 relativ elastisch sind, während die Bodenplatte 14 aus einem mit einem isolierenden Überzug versehenen Blechbauteil bestehen kann.

Fig. 3 zeigt eine Ausführungsform, bei welcher die zusammenwirkenden Randkanten der Keilplatten 7 und Kontaktplatten 6 schwalbenschwanzförmig ausgebildet sind, so daß eine Begrenzung der Bewegung der beiden Platten 6 und 7 gegeneinander erreicht wird.

## Patentansprüche

1. Eine elektrische Schalteinrichtung aufweisende Sicherheitsleiste (1), die aus einer Vielzahl von aneinandergereiht angeordneten Kontaktelementen und Keilelementen besteht, von denen die Kontaktelemente in Ruhestellung unter der Einwirkung einer elastischen Vorspannung an stirnseitig vorgesehenen Kontaktstellen (5) aneinander anliegen und unter der Einwirkung einer äußeren Kraft auf die Sicherheitsleiste (1) den Kontakt unterbrechend auseinanderbewegt werden, wobei wenigstens eine Expanderschnur (12) die einzelnen Kontaktelemente mit ihren Kontaktstellen (5) in axialer Richtung aufeinanderzu zwingt und die aufeinanderzu gerichteten Endflächen der Kontaktelemente und der Keilelemente gegenüber der axialen Längsachse der Kontaktelemente geneigt sind, dadurch gekennzeichnet, daß
a) die Kontaktelemente als Kontaktplatten (6) ausgebildet sind,
b) die Keilelemente als Keilplatten (7) ausgebildet sind,
c) im schaltbereiten Zustand die Expanderschnur (12) in den Kontaktplatten (6) und den Keilplatten (7) in unterschiedlicher Höhe liegt.

2. Sicherheitsleiste nach Anspruch 1, dadurch gekennzeichnet, daß die die Expanderschnur aufnehmende Bohrung (9) in der Kontaktplatte (6) und die Bohrung (10) in der Keilplatte (7) jeweils im wesentlichen dem Durchmesser der Expanderschnur entsprechen, aber in unterschiedlicher Höhe angeordnet sind.

3. Sicherheitsleiste nach Anspruch 1, dadurch gekennzeichnet, daß die die Expanderschnur aufnehmende Bohrung (9) in der Kontaktplatte (6) und die Bohrung (10) in der Keilplatte einen größeren Durchmesser als die Expanderschnur aufweisen, aber in gleicher Höhe innerhalb der Platten liegen.

4. Sicherheitsleiste nach einem oder mehreren der vorhergehenden Ansprüche, dadurch gekennzeichnet, daß die miteinander in Kontakt stehenden Ränder der Keilplatten (7) und Kontaktplatten (6) schwalbenschwanzförmig ausgebildet sind.

## Claims

1. A safety strip (1) comprising electrical switching equipment and consisting of a plurality of contact elements and wedge elements arranged adjacent each other in rows, said contact elements lying, in the rest position under the influence of resilient initial bias, adjacent each other and adjacent contact points (5) provided at their ends and, under the influence of an external force acting on the safety strip (1), being moved apart to break the contact, at least one expander cord (12) forcing the individual contact elements and their contact points (5) towards each other in the axial direction and the end faces facing each other of the contact elements and the wedge elements being inclined with respect to the axial longitudinal axis of the contact elements, characterized in that
a) the contact elements are constructed as contact plates (6),
b) the wedge elements are constructed as wedge plates (7),
c) in the switch-ready state the expander cord (12) lies at different levels in the contact plates (6) and the wedge plates (7).

2. A safety strip according to claim 1, characterized in that the hole (9) in the contact plate (6) accommodating the expander cord and the hole (10) in the wedge plate (7) each correspond substantially to the diameter of the expander cord, but are arranged at different levels.

3. A safety strip according to claim 1, characterized in that the hole (9) in the contact plate (6) accommodating the expander cord and the hole (10) in the wedge plate have a larger diameter than the expander cord, but lie at the same level inside the plates.

4. A safety strip according to any one of the preceding claims, characterized in that the mutually contacting edges of the wedge plates (7) and contact plates (6) are of dovetailed construction.

## Revendications

1. Bordure de sécurité (1) présentant un dispositif de commutation électrique, laquelle se compose d'une pluralité d'éléments de contact et d'éléments en forme de coin disposés en rangées, dont les éléments de contact sont contigus les uns des autres dans la position de repos sous l'action d'une précontrainte élastique en des points de contact (5) prévus sur leurs faces antérieures et sont écartés les uns des autres sous l'action d'une force extérieure exercée sur la bordure de sécurité (1) en interrompant le contact, au moins un cordon extensible (12) forçant les différents éléments de contact les uns vers les autres par leurs points de contact (5) dans le sens axial et les surfaces d'extrémité orientées les unes vers les autres des éléments de contact et des éléments coniques étant inclinées par rapport à l'axe longitudinal axial des éléments de contact, caractérisée en ce que
a) les éléments de contact sont conçus comme des plaques de contact (6),
b) les éléments en forme de coin sont conçus comme des plaques en forme de coin (7),
c) à l'état prêt à commuter le cordon extensible (12) se trouve à une hauteur différente dans les plaques de contact (6) et les plaques en forme de coin (7).

2. Bordure de sécurité selon la revendication 1, caractérisée en ce que le trou (9) dans la plaque de contact (6) et le trou (10) dans la plaque en forme de coin (7) recevant le cordon extensible correspondent chacun sensiblement au diamètre du cordon extensible, mais sont disposés à une hauteur différente.

3. Bordure de sécurité selon la revendication 1, caractérisée en ce que le trou (9) dans la plaque de contact (6) et le trou (10) dans la plaque en forme de coin recevant le cordon extensible présentent un plus grand diamètre que le cordon extensible, mais se trouvent à la même hauteur à l'intérieur des plaques.

4. Bordure de sécurité selon l'une quelconque des revendications précédentes, caractérisée en ce que les bords des plaques en forme de coin (7) et des plaques de contact (6) se trouvant en contact les uns avec les autres sont conformés en queue d'aronde.
